# EUROPÄISCHE PATENTANMELDUNG

(11) **EP 0 817 305 A2**
(43) Veröffentlichungstag der Anmeldung: **07.01.1998**
(21) Anmeldenummer: 97401354.2
(22) Anmeldetag: 16.06.1997
(51) Int. Cl.: H01Q 1/12, H02G 3/26

(54) **Schelle zum Anbringen eines langgestreckten Gegenstandes an einer Wand**

(30) Priorität: 02.07.1996 DE 19626453
(71) Anmelder: ALCATEL ALSTHOM COMPAGNIE GENERALE D'ELECTRICITE, 75008 Paris (FR)
(72) Erfinder: Horn, Thomas, 30165 Hannover (DE); Schiefer, Hans-Jürgen, 30459 Hannover (DE)
(74) Vertreter: Döring, Roger, Dipl.-Ing.

(57) **Zusammenfassung**

Es wird eine Schelle zum Anbringen eines Kabels (2) an einer Wand (1) angegeben, die einem an der Wand (1) zu befestigenden Grundkörper (6) und aus einer Kappe (7) besteht. Der Grundkörper (6) weist an seinem in Montageposition von der Wand (1) wegweisenden Ende eine Mulde (8) zur Aufnahme des Kabels (2) auf, die in Montageposition durch die Kappe (7) verschlossen ist. Der Grundkörper (6) hat drei getrennte, die Eckpunkte eines Dreiecks bildende Anlageflächen (9,10,11) zur Anlage an der Wand (1). Der Teil der Kappe (7), welcher in Montageposition am Kabel (2) anliegt, ist elastisch verformbar ausgeführt.

## Beschreibung

Die Erfindung bezieht sich auf eine Schelle zum Anbringen eines langgestreckten Gegenstandes an einer Wand, bestehend aus einem an der Wand zu befestigenden Grundkörper, der an seinem in Montageposition von der Wand wegweisenden Ende eine Mulde zur Aufnahme des Gegenstandes aufweist, und aus einer am Grundkörper zu befestigenden Kappe, welche die Mulde in Montageposition unter Anlage am Gegenstand verschließt (DE-U-9 212 516).

"Langgestreckter Gegenstand" im Sinne der Erfindung können Kabel aller Art oder auch Rohre sein. Von besonderer Bedeutung sind abstrahlende Hochfrequenz-Kabel - im folgenden kurz "AHF-Kabel" genannt -, die in großer Länge beispielsweise in Tunnelstrecken verlegt werden. Stellvertretend für alle anderen möglichen Einsatzfälle wird im folgenden die Verlegung von AHF-Kabeln berücksichtigt.

AHF-Kabel werden beispielsweise zur Informationsübertragung zwischen Zügen und ortsfesten Stationen eingesetzt. Sie müssen dazu entlang von vorgegebenen Strecken in relativ genau einzuhaltender Position beispielsweise an der Wand von Tunneln angebracht werden. Dazu werden einfach zu montierende Schellen benötigt, welche die AHF-Kabel sicher halten. Die Schellen müssen außerdem so aufgebaut sein, daß eine Beschädigung der relativ empfindlichen AHF-Kabel bei der Montage ausgeschlossen werden kann.

Bei der bekannten Schelle nach der eingangs erwähnten DE-U-9 212 516 werden Schellen eingesetzt, die aus einem durch einen Deckel verschließbaren Tragarm bestehen. Zwischen beiden Teilen liegt ein Aufnahmeraum für ein AHF-Kabel. Der Tragarm ist über einen Fuß mit einer geschlossenen Anlagefläche an eine Wand anschraubbar. Der Deckel ist über ein nichtmetallisches Scharnier schwenkbar am Tragarm angebracht und mit demselben verriegelbar. In dem Aufnahmeraum für das AHF-Kabel sind zum Toleranzausgleich sowohl am Tragarm als auch am Deckel Federelemente angebracht, die in Montageposition am AHF-Kabel anliegen.

Der Erfindung liegt die Aufgabe zugrunde, die eingangs geschilderte Schelle so weiterzubilden, daß Aufbau und Montage einfacher sind.

Diese Aufgabe wird gemäß der Erfindung dadurch gelöst,
- daß der Grundkörper drei getrennte, die Eckpunkte eines Dreiecks bildende Anlagefläche zur Anlage an der Wand aufweist und
- daß der Teil der Kappe, welcher in Montageposition am AHF-Kabel anliegt, elastisch verformbar ausgeführt ist.

Durch die drei Anlageflächen des Grundkörpers wird dessen feste Montage an einer Wand vereinfacht. Die Qualität der Oberfläche der Wand ist dabei von untergeordneter Bedeutung, da der Grundkörper durch die Dreipunkt-Anlage aufjeden Fall wackelfrei an derselben befestigt werden kann. Dabei ist eine besonders genaue Position desselben nicht erforderlich, weil eventuelle Abweichungen von dieser Position durch die Kappe der Schelle ausgeglichen werden, die mit ihrem elastisch verformbaren Teil am AHF-Kabel anliegt. Dadurch können nicht nur Montageabweichungen und Maßschwankungen der zu verlegenden AHF-Kabel ausgeglichen werden, sondern es ist auch eine beschädigungsfreie Montage des AHF-Kabels sichergestellt.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
- Fig. 1: in schematischer Darstellung eine Verlegungsstrecke eines AHF-Kabels.
- Fig. 2: eine Seitenansicht einer Schelle nach der Erfindung in vergrößerter Darstellung.
- Fig. 3: eine Draufsicht auf die Schelle nach Fig. 2.
- Fig. 4: einen Schnitt durch die Schelle nach Fig. 3 entlang der Linie IV - IV.
- Fig. 5: eine Ansicht der Schelle von unten.

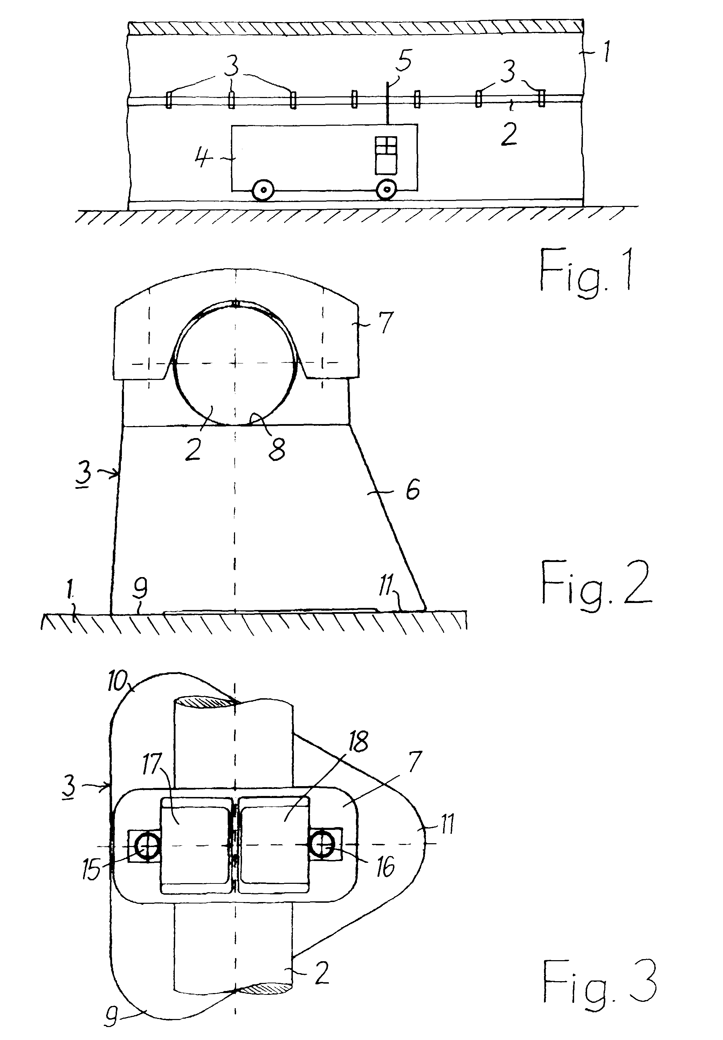

In Fig. 1 ist schematisch ein Abschnitt einer Tunnelstrecke einer Bahnlinie dargestellt. An der Wand 1 des Tunnels ist ein AHF-Kabel 2 verlegt, das mit aus Kunststoff bestehenden Schellen 3 an der Wand befestigt ist. Auf dem Gleis der Bahnlinie befindet sich im Tunnel ein nur schematisch angedeutetes Fahrzeug 4, das mit einer Antenne 5 ausgerüstet ist. Zwischen dem AHF-Kabel 2 und der Antenne 5 findet gegebenfalls eine Übertragung von Signalen statt.

Die Schellen 3 bestehen gemäß Fig. 2 aus einem an der Wand 1 anzubringenden Grundkörper 6 und aus einer Kappe 7, die fest mit dem Grundkörper 6 zu verbinden ist. Beide Teile sind aus Kunststoff hergestellt. Für den Grundkörper 6 kann beispielsweise ein glasfaserverstärkter Kunststoff eingesetzt werden. Die Kappe 7 besteht vorzugsweise aus Polyamid. Zwischen Grundkörper 6 und Kappe 7 ist das AHF-Kabel 2 angeordnet. Der Grundkörper 6 hat dazu an seinem der Befestigungsseite abgewandten Ende eine halbkreisförmige Mulde 8. Das AHF-Kabel 2 hat in montiertem Zustand einen der Höhe des Grundkörpers 6 entsprechenden Abstand von der Wand 1 des Tunnels.

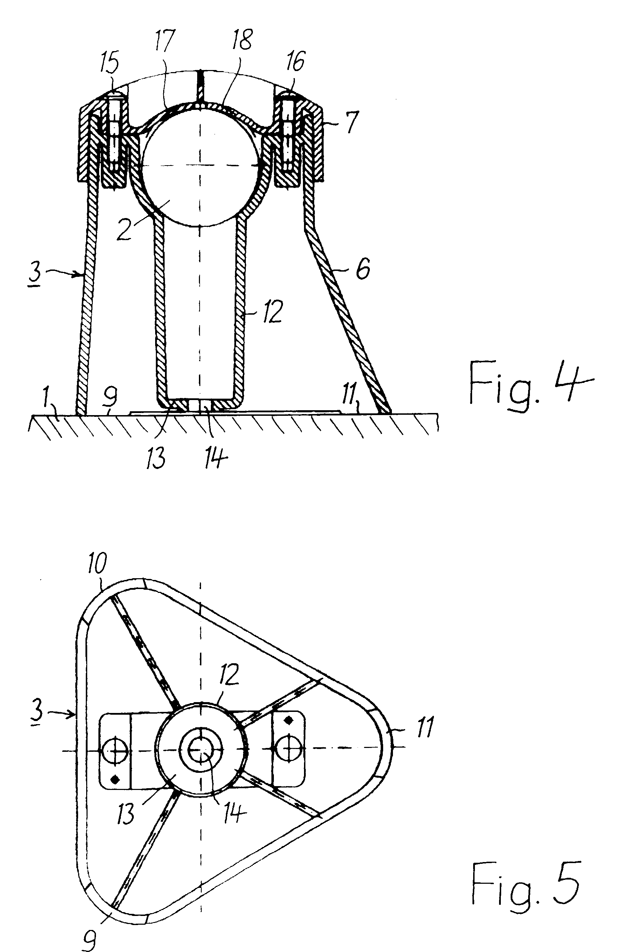

Der Grundkörper 6 kann entsprechend den Fig. 3 und 5 als etwa dreieckige Haube ausgeführt sein. Die Haube kann aber auch rund oder oval oder in anderer geometrischer Form ausgeführt sein. Der Grundkörper 6 hat in allen möglichen Ausführungsformen an seinem zur Anlage an der Wand 1 bestimmten Ende drei voneinander getrennte Anlageflächen 9, 10 und 11, die gemäß Fig. 5 die Eckpunkte eines beispielsweise gleichschenkligen Dreiecks bilden. Im Grundkörper 6 ist zentral ein Rohr 12 angebracht, das zu seiner Befestigung und damit zur Befestigung der Schelle 3 an der Wand 1 dient. Das Rohr 12 hat dazu am Befestigungsende beispielsweise eine Querwand 13, an der Befestigungsmittel angebracht werden können. Im dargestellten Ausführungsbeispiel hat die Querwand 13 ein Loch 14, durch welches eine Schraube hindurchgeführt werden kann.

Die Kappe 7 der Schelle 3 verschließt im montierten Zustand die Mulde 8 des Grundkörpers 6. Sie kann beispielsweise mittels Schrauben 15 und 16 mit dem Grundkörper 6 verschraubt werden. Es ist jedoch auch eine federnd einrastende Verbindung der Kappe 7 mit dem Grundkörper 6 möglich. In ihrem mittleren, zur Anlage am AHF-Kabel 2 bestimmten Bereich ist die Kappe 7 elastisch verformbar ausgeführt. Dafür kann die Kappe 7 entsprechend den Fig. 3 und 4 beispielsweise mit zwei breiten federnden Zungen 17 und 18 ausgerüstet sein, die in montiertem Zustand fest am AHF-Kabel 2 anliegen und gegen dasselbe drücken. Das Material der Kappe 7 ist so gewählt, daß die federnde Eigenschaft der Zungen 17 und 18 auf Dauer gewährleistet ist. Ein solches Material ist - wie bereits erwähnt - beispielsweise Polyamid.

Zur Montage eines AHF-Kabels 2 an einer Wand 1 wird beispielsweise wie folgt vorgegangen:

In vorgegebenem Abstand voneinander werden zunächst entlang der Verlegestrecke Grundkörper 6 der Schellen 3 montiert. Die Grundkörper 6 stützen sich dann über ihre drei Anlageflächen 9, 10 und 11 an der Wand 1 ab. Es ist durch diese drei, in Form eines Dreiecks angeordneten Anlageflächen ein fester und wackelfreier Sitz der Grundkörper 6 an der Wand 1 sichergestellt. Anschließend wird das AHF-Kabel 2 in die Mulden 8 der Grundkörper 6 eingelegt. Nach Aufsetzen der Kappen 7, die vorzugsweise mit dem Grundkörper 6 verschraubt werden, ist das AHF-Kabel 2 positionsrichtig an der Wand 1 befestigt.

## Patentansprüche

1. Schelle zum Anbringen eines langgestreckten Gegenstandes an einer Wand, bestehend aus einem an der Wand zu befestigenden Grundkörper, der an seinem in Montageposition von der Wand wegweisenden Ende eine Mulde zur Aufnahme des Gegenstandes aufweist, und aus einer am Grundkörper zu befestigenden Kappe, welche die Mulde in Montageposition unter Anlage am Gegenstand verschließt, dadurch gekennzeichnet,
- daß der Grundkörper (6) drei getrennte, die Eckpunkte eines Dreiecks bildende Anlageflächen (9,10,11) zur Anlage an der Wand (1) aufweist und
- daß der Teil der Kappe (7), welcher in Montageposition am Gegenstand (2) anliegt, elastisch verformbar ausgeführt ist.

2. Schelle nach Anspruch 1, dadurch gekennzeichnet, daß der Grundkörper (6) als Haube ausgebildet ist, die ein zentrales, ihrer Befestigung an der Wand (1) dienendes Rohr (12) aufweist, das am Befestigungsende eine zur Anbringung von Befestigungsmitteln geeignete Querwand (13) hat und am gegenüberliegenden Ende in die Mulde (8) übergeht.

3. Schelle nach Anspruch 1 oder 2, dadurch gekennzeichnet, daß die Kappe (7) deren elastisch verformbaren Teil bildende, federnde Zungen (17,18) aufweist.

4. Schelle nach einem der Ansprüche 1 bis 3, dadurch gekennzeichnet, daß die Kappe (7) mit dem Grundkörper (6) verschraubbar ist.
